# FASCICULE DE BREVET EUROPEEN

(11) **EP 3 688 892 B1**
(45) Date de publication et mention de la délivrance du brevet: **16.02.2022**
(21) Numéro de dépôt: 18782107.9
(22) Date de dépôt: 11.09.2018
(51) Int. Cl.: H04B 13/00, H04B 5/00

(54) **PROCÉDÉ ET SYSTÈME DE RECONNAISSANCE D'UN UTILISATEUR LORS D'UNE COMMUNICATION RADIO VIA LE CORPS HUMAIN**
VERFAHREN UND SYSTEM ZUR ERKENNUNG EINES BENUTZERS WÄHREND EINER FUNKKOMMUNIKATION ÜBER DEN MENSCHLICHEN KÖRPER
METHOD AND SYSTEM FOR RECOGNISING A USER DURING A RADIO COMMUNICATION VIA THE HUMAN BODY

(30) Priorité: 29.09.2017 FR 1759103
(43) Date de publication de la demande: 05.08.2020
(73) Titulaire: ORANGE, 92130 Issy-les-Moulineaux (FR)
(72) Inventeur: LEVIONNAIS, Philippe, 92326 Châtillon Cedex (FR); LEPETIT, Olivier, 92326 Châtillon Cedex (FR); HUET, Romain, 92326 Châtillon Cedex (FR)
(86) Numéro de dépôt international: PCT/FR2018/052216
(87) Numéro de publication internationale: WO 2019/063902

(56) Documents cités:
- WO-A1-2013/136119
- WO-A1-2016/001506
- QIFAN PU ET AL: "Whole-home gesture recognition using wireless signals", PROCEEDINGS OF THE 19TH ANNUAL INTERNATIONAL CONFERENCE ON MOBILE COMPUTING & NETWORKING, MOBICOM '13, 1 janvier 2013 (2013-01-01), page 27, XP055233874, New York, New York, USA DOI: 10.1145/2500423.2500436 ISBN: 978-1-4503-1999-7

## Description

L'invention concerne les communications initiées sur un canal sans fil à courte portée. Plus précisément, l'invention porte sur un procédé pour mettre en œuvre des services sécurisés entre un terminal portatif et un dispositif aptes à initier une communication utilisant la capacité de conductivité du corps humain pour transmettre les ondes électromagnétiques porteuses de telles communications sans fils.

### Etat de la technique

Au cours des décennies passées sont apparues de nouvelles techniques de communication sans fils utilisant pour canal le corps humain. Dans ces technologies que l'on regroupe sous le terme générique d'IBC (de l'anglais : *Intra-Body Communication*) ou encore BCC (pour *Body Channel Communication*)*,* le corps humain agit comme un conducteur pour transmettre des informations d'un point à un autre. On s'intéresse ici plus particulièrement aux méthodes basées sur un couplage par induction, aussi appelées fréquemment « méthodes par champ proche » ou NF (de l'anglais *Near Field*)*,* adaptées à une communication de proximité. Les communications en champ proche sont usuellement connues sous le sigle « NFC » (pour « Near Field Communication »), basées principalement sur la norme ISO (International Standard Organisation) 14443, utilisent des technologies sans fils pour permettre un échange d'informations entre deux périphériques éloignés d'une courte distance.

On connaît dans l'état de la technique des systèmes permettant d'échanger des messages en utilisant la capacité de conductivité du corps humain pour transmettre les ondes électromagnétiques porteuses de communications sans fils. La demande de brevet internationale du demandeur publiée sous le numéro WO2017/093639 décrit notamment un système de communication comprenant un dispositif émetteur portatif, ou mobile, dont l'antenne est en contact avec, ou très proche, de l'utilisateur, que l'on appelle ici le « porteur ». Par « proche », on entend une distance de l'ordre de quelques millimètres à quelques centimètres. Ce système selon l'état de l'art comporte aussi un dispositif dit maître, ou station de base, qui comprend une surface constituée d'une antenne dont l'utilisateur peut approcher la main pour établir une communication. Ce type de système offre l'avantage pour l'utilisateur de pouvoir conserver le terminal en poche durant toute la durée du traitement, donc d'avoir les mains libres, sans crainte de se faire dérober ou de laisser tomber le terminal, ou de perdre du temps en le cherchant dans un sac, etc. Dans la suite, on appellera ce système « CBB » (pour *Communication By Body*) afin de le distinguer des autres systèmes qui nécessitent un contact direct avec le corps de l'utilisateur.

Cependant aujourd'hui, la communication CBB n'est pas sécurisée. Le porteur lui-même peut valider une transaction par erreur : s'il s'approche suffisamment du dispositif, l'onde peut être reçue alors que l'utilisateur n'a pas approché volontairement la main. Ce type de système n'assure pas non plus l'identification du porteur du mobile. En effet, dans le système décrit ci-dessus, on peut imaginer qu'un second utilisateur, par exemple malveillant, utilise la transaction à son propre avantage : il peut voler le terminal de l'utilisateur, ou encore le bousculer au moment où celui-ci s'approche de la borne pour passer la porte à la place du porteur, valider un achat, etc.

Pour sécuriser un tel accès, il est possible de requérir en outre que l'utilisateur saisisse un code confidentiel. Cette méthode est cependant fastidieuse et présente un risque de vol du code confidentiel.

Il a aussi été proposé, dans la demande WO2016/001506 du demandeur, de détecter et valider un geste volontaire de l'utilisateur, afin de s'assurer que le geste d'approche est réellement effectué. Cependant cette solution, si elle évite un rapprochement fortuit du dispositif récepteur, présente toujours des inconvénients, puisque n'importe quelle personne s'étant approprié le mobile ou étant à proximité du mobile peut effectuer un tel geste, c'est-à-dire que l'utilisateur ne peut être ni reconnu, ni identifié, ni authentifié. La demanda WO 2013/136119 A1 décrit un système de transmission de données via le corps humain en utilisant une technologie capacitive. L'utilisateur est équipé d'un terminal (user device 105) équipé d'une interface de contact (touch display 225).

L'invention offre une solution ne présentant pas les inconvénients de l'état de la technique.

### L'invention

L'invention est telle que définie dans les revendications annexées. A cet effet, selon un aspect fonctionnel, l'invention concerne un procédé de reconnaissance d'un utilisateur porteur d'un terminal, ledit terminal étant apte à recevoir un signal radio en provenance d'un dispositif maître muni d'une antenne apte à émettre le signal, ledit signal étant destiné à être transmis entre le dispositif maître et le terminal sur un premier canal utilisant des capacités de conduction d'onde électromagnétique du corps de l'utilisateur lorsqu'au moins une partie dudit corps de l'utilisateur telle que sa main se trouve à proximité de l'antenne, caractérisé en ce que :
- lorsque l'utilisateur réalise un mouvement, dit mouvement caractéristique, pour approcher ladite partie de son corps de l'antenne du dispositif, ledit dispositif maître transmet un signal caractéristique dudit mouvement ;
- et le procédé comporte les étapes de :
   - réception sur le terminal d'un signal en provenance du dispositif maître ;
   - génération d'une première donnée caractéristique du mouvement en fonction du signal reçu ;
   - obtention d'au moins une seconde donnée caractéristique, dite signature de référence ;
   - comparaison de la première donnée caractéristique avec ladite au moins une signature de référence ;
   - en fonction des résultats de la comparaison, reconnaissance de l'utilisateur.

Selon l'invention, une onde porteuse radio, ou signal électromagnétique, est transmise à travers le corps d'un utilisateur depuis le dispositif émetteur, dit maître, vers un dispositif récepteur, dit terminal. L'utilisateur peut être reconnu et par la suite identifié ou authentifié en effectuant un mouvement volontaire caractéristique en direction du dispositif maître, tout en gardant le terminal portable, par exemple son *smartphone,* en poche. Par mouvement volontaire de l'utilisateur, on entend tout mouvement effectué consciemment par celui-ci dans le but de se faire reconnaître, typiquement un mouvement de main ou de bras connu de lui seul. Un tel mouvement génère un signal de caractéristiques propres au niveau du terminal : le dispositif maître émet en permanence un signal électromagnétique mais celui-ci n'est transmis que lorsque l'utilisateur s'approche de l'antenne du dispositif. La transmission du signal s'interrompt lorsque l'utilisateur s'éloigne de l'antenne, et reprend lorsque l'utilisateur s'en approche de nouveau ; l'amplitude du signal augmente ou diminue selon la distance entre sa main et l'antenne. La forme du signal généré et transmis via le corps de l'utilisateur dépend donc du mouvement, mais aussi d'un certain nombre de caractéristiques propres au porteur (corpulence, âge, sexe, humidité des tissus, etc.), ainsi que des moyens de réception du terminal (caractéristiques et position de l'antenne, etc.). L'analyse d'un tel signal (forme, puissance, etc.) permet donc d'en dégager des caractéristiques propres à l'utilisateur et/ou à son mouvement et/ou à son terminal, donc de le reconnaître par comparaison avec un signal similaire connu (une signature). Si un autre utilisateur s'approprie le terminal, d'une part il ne dispose pas des mêmes caractéristiques biométriques, d'autre part il n'a pas de raison de connaître le mouvement volontaire de l'utilisateur. Il ne pourra donc être reconnu.

Par « reconnaissance », on entend ici la reconnaissance de l'utilisateur au sens large. Il peut s'agir d'une authentification, c'est-à-dire une vérification de la légitimité de l'utilisateur du terminal (ou reconnaissance du fait que l'utilisateur est bien le propriétaire du téléphone), ou d'une identification de l'utilisateur, c'est à dire l'établissement de l'identité de l'utilisateur (il s'agit de Jacques et non de Paul) ; l'identification peut naturellement être suivie d'une authentification (Jacques est légitime pour utiliser le terminal).

Par «proximité», on entend une distance suffisamment petite pour que la communication soit établie sur le canal CBB (par exemple inférieure à quelques cm, ce qui est raisonnable pour que l'utilisateur porte le terminal dans une poche). On notera que la peau de l'utilisateur n'a pas besoin d'être en contact avec le terminal pour que la communication s'établisse ; la main de l'utilisateur n'est pas non plus nécessairement en contact physique avec l'antenne du dispositif.

Selon un mode de mise en œuvre particulier, un tel procédé est caractérisé en ce que ladite au moins une signature de référence est associée à un profil d'un utilisateur et en ce que l'étape de reconnaissance est suivie d'une étape de sélection du profil de l'utilisateur reconnu.

Avantageusement selon ce mode, un service va pouvoir être personnalisé, c'est-à-dire adapté à l'utilisateur qui vient d'être reconnu. Par exemple, dans le contexte d'un réseau domestique, les objets de ce réseau peuvent agir différemment selon la personne qui demande un service (l'un des membres du foyer) auprès du dispositif maître (une borne de lecture sur la passerelle domestique, le téléviseur, etc.) L'association d'un profil à chaque utilisateur du foyer permet de sélectionner simplement le bon profil une fois que l'utilisateur du terminal a été reconnu, et par la suite de personnaliser les services rendus par les objets du réseau local.

Selon un autre mode de mise en œuvre particulier, qui pourra être mis en œuvre alternativement ou cumulativement avec le précédent, un tel procédé est caractérisé en ce que l'étape de reconnaissance est suivie d'une étape d'établissement d'une communication radio sur un second canal n'utilisant pas des capacités de conduction d'onde électromagnétique du corps de l'utilisateur.

Avantageusement selon ce mode, l'utilisateur étant reconnu, un canal radio, par exemple Bluetooth ou Wi-Fi, distinct du corps, est ouvert entre les deux appareils. Ce canal, de capacité plus élevée que le premier canal, et de surcroît bidirectionnel, pourra être utilisé avantageusement pour transporter les données utiles au service requis (données monétaires, tickets de transport, etc.)

Selon un autre mode de mise en œuvre particulier, qui pourra être mis en œuvre alternativement ou cumulativement avec les précédents, un tel procédé est caractérisé en ce que l'étape d'établissement d'une première donnée caractéristique du mouvement comporte une sous-étape de détection d'un palier au moins correspondant à un geste volontaire de l'utilisateur.

Par palier, ou créneau, on entend une portion du signal comportant un front montant, un front descendant et un plateau entre les deux, généré par un geste volontaire d'approche de l'utilisateur. Par geste volontaire, on entend donc une partie d'un mouvement plus complexe de l'utilisateur. Par exemple, le mouvement propre à l'utilisateur peut être constitué de trois tapotements selon une séquence temporelle choisie. Chacun des tapotements correspond à un geste volontaire et génère un palier caractéristique dans le signal. Selon un more de réalisation de l'invention, le signal n'est soumis à analyse ultérieure que si l'un au moins des tapotements est présent. Il est en effet inutile de traiter le signal et procéder à l'identification s'il correspond à un mouvement fortuit de l'utilisateur. Un geste volontaire peut donc être recherché dans le signal avant de l'analyser complètement. Ceci permet notamment d'éviter une surcharge de l'équipement chargé de l'analyse (e.g. le terminal mobile) puisque seuls les gestes volontaires pourront être soumis à reconnaissance ultérieure. En revanche, si l'un au moins des paliers est présent, il est intéressant de poursuivre l'analyse et de détecter les paliers suivants afin de déterminer une courbe caractéristique qui peut être confrontée à la signature de l'utilisateur.

Selon un autre mode de mise en œuvre particulier, qui pourra être mis en œuvre alternativement ou cumulativement avec les précédents, un tel procédé est caractérisé en ce que l'étape de génération d'une première donnée caractéristique du mouvement comporte les sous-étapes suivantes :
- numérisation du signal reçu ;
- détection dans le signal numérique d'au moins un front montant et un front descendant correspondant à au moins un palier ;
- génération de la première donnée caractéristique sous la forme d'un signal numérique comportant au moins ledit palier.

Avantageusement selon ce mode, la première donnée caractéristique, représentative du mouvement, est générée sous une forme simple correspondant à un signal comportant autant de paliers que l'utilisateur a effectué de gestes volontaires. Chaque geste volontaire élémentaire (tapotement, approche rapide suivie d'un recul, balayage, etc.) se traduit en effet par un palier caractéristique dans le signal obtenu. Une telle courbe de signal peut être facilement confrontée et comparée à une signature de référence de l'utilisateur établie selon les mêmes critères.

Selon un autre mode de mise en œuvre particulier, qui pourra être mis en œuvre alternativement ou cumulativement avec les précédents, un tel procédé est caractérisé en ce que l'étape de comparaison comporte les sous-étapes suivantes, après compensation d'un éventuel décalage entre la donnée caractéristique et la signature de référence:
- mesure d'une distance entre la première donnée caractéristique et la signature de référence ;
- validation de la comparaison en fonction de la distance mesurée.

Ce mode de réalisation de l'invention permet une mise en œuvre simple d'une étape de comparaison entre la donnée caractéristique obtenue suite au mouvement volontaire de l'utilisateur et la signature de référence. Tout type de calcul de distance à la portée de l'homme du métier pourra être utilisé. Cette distance peut être classiquement comparée à un seuil prédéterminé, ou distance maximale acceptable entre les deux signaux. Comme les deux signaux ne sont pas forcément alignés dans le temps car on ne peut maîtriser le moment auquel l'utilisateur initie son mouvement, il est souhaitable d'utiliser au préalable un algorithme de traitement capable de prendre en compte et de compenser un éventuel décalage entre les signaux.

Selon un autre aspect fonctionnel, l'invention concerne un procédé d'apprentissage d'une signature de référence d'un utilisateur porteur d'un terminal, ledit terminal étant apte à recevoir un signal radio en provenance d'un dispositif maître muni d'une antenne apte à émettre le signal, ledit signal étant destiné à être transmis entre le dispositif maître et le terminal en utilisant des capacités de conduction d'onde électromagnétique du corps de l'utilisateur lorsqu'au moins une partie du corps de l'utilisateur telle que sa main se trouve à proximité de l'antenne, le procédé étant caractérisé en ce que :
- lorsque l'utilisateur réalise un mouvement, dit mouvement caractéristique, pour approcher ladite partie de son corps de l'antenne du dispositif, ledit dispositif maître transmet un signal caractéristique dudit mouvement ;
- et le procédé comporte les étapes de :
   - réception d'une pluralité de signaux en provenance du dispositif maître ;
   - génération d'une donnée caractéristique, dite signature de référence, en fonction de la pluralité de signaux reçus ;
   - enregistrement de ladite signature en tant que signature référence de l'utilisateur.

Avantageusement, l'invention selon cet aspect fonctionnel permet d'enregistrer une signature de l'utilisateur, pour identification et/ou authentification ultérieure, en lui demandent d'effectuer plusieurs fois un mouvement volontaire caractéristique en direction du dispositif maître, tout en gardant le terminal portable, par exemple son *smartphone,* dans sa poche. Le dispositif d'apprentissage se trouve typiquement situé sur le terminal de l'utilisateur mais pourrait se trouver à un autre endroit, dans le réseau ou sur le dispositif maître. L'utilisateur fait un mouvement naturel ou choisit à cet effet un mouvement particulier qui lui est propre, et le répète autant de fois que nécessaire en s'approchant du dispositif maître (qui peut être par exemple situé dans une boutique de l'opérateur de télécommunications auquel est rattaché le terminal, ou au domicile de l'utilisateur, etc.) Comme il l'a été expliqué auparavant, la forme du signal généré et transmis via le corps de l'utilisateur dépend du mouvement, ainsi que d'un certain nombre de caractéristiques propres au porteur (corpulence, âge, sexe, humidité des tissus etc.) et au terminal. En bénéficiant de plusieurs tels signaux, un signal caractéristique (moyenne des signaux d'entrée, signal minimisant l'écart type de la distribution des signaux d'entrée, etc.) peut être calculé, correspondant à une signature fiable de l'utilisateur. On notera que plus on dispose de signaux proches les uns des autres et plus cette signature est représentative du mouvement particulier à l'utilisateur.

Selon une variante de ce mode de mise en œuvre particulier, un tel procédé d'apprentissage est caractérisé en ce qu'il comporte en outre une étape d'obtention du nombre nécessaire de signaux de ladite pluralité de signaux.

Avantageusement selon ce mode, le nombre de signaux à générer pour le procédé d'apprentissage, et donc de mouvements volontaires à effectuer par l'utilisateur vers la borne d'apprentissage, est paramétrable. Il peut être par exemple choisi statistiquement de manière à pouvoir calculer une signature suffisamment fiable de l'utilisateur. Ce nombre peut être par exemple prédéfini en usine (on peut décider que 5 signaux caractéristiques suffisent à calculer une signature correcte), prédéfini par l'utilisateur, calculé par le procédé, etc.

Selon une autre variante de ce mode de mise en œuvre particulier, qui pourra être mise en œuvre alternativement ou cumulativement avec la précédente, un tel procédé d'apprentissage est caractérisé en ce l'étape d'obtention du nombre nécessaire de signaux comporte les sous-étapes suivantes :
- obtention d'une pluralité de signaux caractéristiques ;
- calcul d'une distance entre lesdits signaux de la pluralité de signaux ;
- en fonction de la distance calculée, obtention d'un nouveau signal caractéristique à ajouter à la pluralité de signaux caractéristiques.

Avantageusement selon cette variante, le nombre de signaux à générer, et donc de mouvements volontaires à effectuer par l'utilisateur vers la borne d'apprentissage, est calculé par le procédé d'apprentissage lui-même, en fonction de la fiabilité et/ou de la ressemblance entre les différents signaux générés par le mouvement de l'utilisateur. Par exemple, l'algorithme peut décider que trois signaux « proches » les uns des autres (au sens d'une mesure de distance) suffisent à établir une signature. Si en revanche les trois premiers signaux obtenus sont très « différents » les uns des autres, au sens d'une mesure de distance, il convient d'acquérir des signaux supplémentaires afin de pouvoir calculer une signature correcte à partir de la distribution des signaux. Toute mesure de distance à la portée de l'homme du métier peut être utilisée (distance euclidienne, fonction de corrélation, etc.) Cette distance peut être classiquement comparée à chaque étape à un seuil prédéterminé, ou distance maximale acceptable, et selon les résultats de la comparaison, un nouveau signal caractéristique est ajouté ou non à la pluralité de signaux.

Selon un aspect matériel, l'invention concerne également un dispositif de vérification d'une signature caractérisé en ce qu'il comporte les modules suivants :
- un module de réception d'une première donnée caractéristique d'un mouvement ;
- un module d'obtention d'au moins une seconde donnée caractéristique, dite signature ;
- un module de comparaison de la première donnée caractéristique avec ladite au moins une signature ;
- un module de communication des résultats de la comparaison.

Selon un aspect matériel, l'invention concerne également un terminal porté par un utilisateur, ledit terminal étant apte à recevoir un signal radio en provenance d'un dispositif maître muni d'une antenne apte à émettre le signal, ledit signal étant destiné à être transmis entre le dispositif maître et le terminal en utilisant des capacités de conduction d'onde électromagnétique du corps de l'utilisateur lorsqu'au moins une partie du corps de l'utilisateur telle que sa main se trouve à proximité de l'antenne, caractérisé en ce que le dit terminal comporte les modules suivants :
- un module de réception d'un signal en provenance du dispositif maître ;
- un module de génération d'une première donnée caractéristique du mouvement en fonction du signal reçu ;
- un module d'obtention d'un résultat de comparaison de la première donnée caractéristique avec au moins une signature de référence ;
- un module de reconnaissance de l'utilisateur, en fonction du résultat de la comparaison.

Selon un autre aspect matériel, l'invention concerne également un système de reconnaissance d'un utilisateur comprenant :
- un dispositif, dit dispositif maître, muni d'une antenne apte à émettre un signal destiné à être transmis entre le dispositif maître et au moins un terminal en utilisant des capacités de conduction d'onde électromagnétique du corps de l'utilisateur lorsqu'au moins une partie du corps de l'utilisateur telle que sa main se trouve à proximité de l'antenne,
- au moins un terminal d'un l'utilisateur tel que décrit précédemment, comprenant un dispositif de vérification d'une signature tel que décrit précédemment,
caractérisé en ce que, lorsque l'utilisateur réalise un mouvement, dit mouvement caractéristique, pour approcher ladite partie de son corps de l'antenne du dispositif maître, ledit dispositif transmet un signal caractéristique dudit mouvement, reçu par le module de réception du terminal de l'utilisateur.

Selon un autre aspect matériel, l'invention concerne également un dispositif d'apprentissage d'une signature de référence d'un utilisateur porteur d'un terminal, ledit terminal étant apte à recevoir un signal radio en provenance d'un dispositif maître muni d'une antenne apte à émettre le signal, ledit signal étant destiné à être transmis entre le dispositif maître et le terminal en utilisant des capacités de conduction d'onde électromagnétique du corps de l'utilisateur lorsqu'au moins une partie du corps de l'utilisateur telle que sa main se trouve à proximité de l'antenne, caractérisé en ce que :
- lorsque l'utilisateur réalise un mouvement, dit mouvement caractéristique, pour approcher ladite partie de son corps de l'antenne du dispositif, ledit dispositif maître transmet un signal caractéristique dudit mouvement ;
- et le dispositif d'apprentissage comporte les modules suivants :
   - un module de réception d'une pluralité de signaux en provenance du dispositif maître ;
   - un module de génération d'une donnée caractéristique, dite signature, en fonction de la pluralité de signaux reçus ;
   - un module d'enregistrement de ladite signature en tant que signature de référence de l'utilisateur.

Selon un autre aspect matériel, l'invention concerne également un terminal comprenant un dispositif d'apprentissage d'une signature tel que décrit ci-dessus.

Selon un autre aspect matériel, l'invention concerne également un programme d'ordinateur apte à être mis en œuvre dans un terminal tel que défini ci-dessus, le programme comprenant des instructions de code qui, lorsque le programme est exécuté par un processeur, réalise les étapes du procédé de reconnaissance et/ou d'apprentissage.

Selon un autre aspect matériel, l'invention concerne également un programme d'ordinateur apte à être mis en œuvre dans un dispositif maître tel que défini ci-dessus, le programme comprenant des instructions de code qui, lorsque le programme est exécuté par un processeur, réalise les étapes du procédé de reconnaissance et/ou d'apprentissage.

Ces programmes peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Selon encore un autre aspect matériel, l'invention a trait à un support d'enregistrement lisible par un processeur de données sur lequel est enregistré un programme comprenant des instructions de code de programme pour l'exécution des étapes de l'un des procédés définis ci-dessus. Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur. D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, le support d'informations peut être un circuit intégré dans lequel le programme est incorporé, le circuit étant adapté pour exécuter ou pour être utilisé dans l'exécution du procédé en question.

De nombreux détails et avantages de l'invention seront mieux compris à la lecture de la description d'un mode particulier de réalisation en référence aux schémas annexés donnés à titre non limitatif et dans lesquels :

### Les figures

- la figure 1 représente un système de communication selon un mode de réalisation de l'invention lorsque l'utilisateur d'un terminal portatif réalise une transaction avec un dispositif maître ;
- la figure 2 représente un terminal selon un mode de réalisation de l'invention ;
- la figure 3 représente un dispositif maître selon un mode de réalisation de l'invention ;
- la figure 4 représente les étapes d'un procédé d'apprentissage d'empreinte caractéristique selon un mode de réalisation de l'invention.
- La figure 5 représente les étapes d'un procédé d'authentification selon un mode de réalisation de l'invention.
- La figure 6 représente les étapes d'un procédé d'identification selon un second mode de réalisation de l'invention.
- La figure 7 représente un exemple de signal correspondant à un mouvement volontaire d'un utilisateur.
- La figure 8 représente un exemple d'empreinte caractéristique ou signature correspondant à un mouvement volontaire d'un utilisateur.

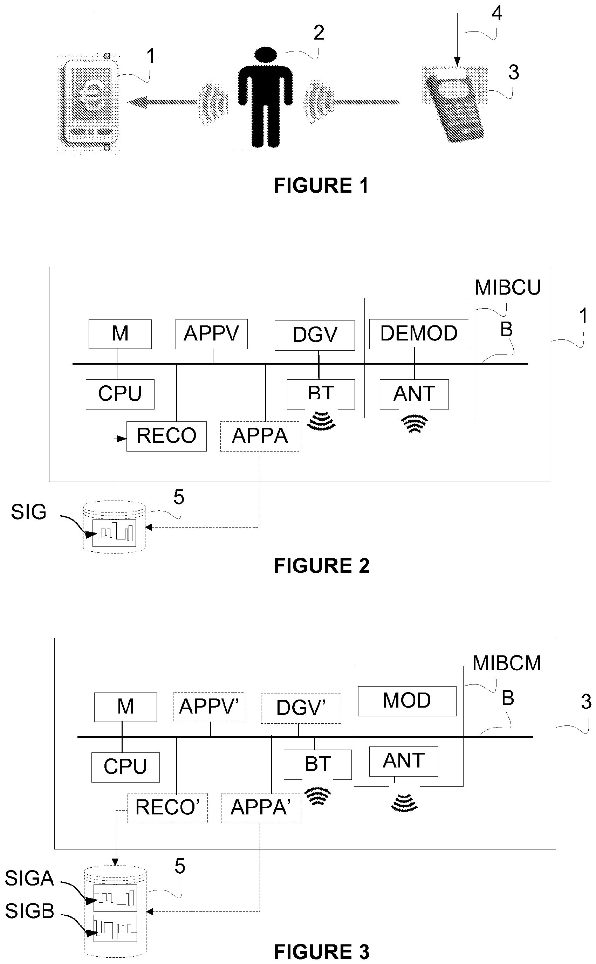

La figure 1 représente un système de communication sans fils selon un mode de réalisation de l'invention lorsqu'un utilisateur (2) porteur d'un dispositif portatif (1), appelé dans la suite terminal, équipé d'un module CBB tel que défini auparavant, s'approche par un mouvement volontaire jusqu'à toucher quasiment le dispositif maître (3), pour mettre en œuvre un service.

Par service, on entend tout type de service, par exemple une transaction monétaire, une validation de ticket, la personnalisation d'un environnement, etc.

L'utilisateur (2) ou porteur du terminal (1) est par exemple un être humain mais pourrait alternativement prendre la forme d'un autre être vivant apte à effectuer le geste volontaire et à transmettre des ondes porteuses radio.

Le dispositif maître (3) peut être par exemple un objet connecté (en anglais, IOT), un TPE (pour Terminal Electronique de Paiement), un ordinateur personnel, une souris d'ordinateur, une passerelle domestique, etc. Il est apte à émettre des signaux radioélectriques de type NFC, à travers le corps de l'utilisateur, via une antenne NFC/CBB (non représentée). Dans cet exemple de réalisation, le dispositif maître (3) comprend une surface constituée par l'antenne éventuellement protégée et adaptée pour réagir lorsque l'utilisateur l'effleure ou entre en proximité avec elle, par exemple en approchant la main. Le terme « surface » n'est nullement limitatif et donné à titre illustratif, l'antenne étant le seul moyen indispensable au fonctionnement du dispositif. L'ensemble constitué de l'antenne, de la surface et plus généralement de tous les composants nécessaires à la mise en œuvre d'une communication IBC est appelé dans la suite « Module IBC Maître», noté MIBCM. On notera que ce module correspond au module NFC standard d'une borne de type NFC paramétrée pour une communication CBB par le chargement d'un programme (logiciel) spécifique, sans modification du hardware. Le dispositif maître selon cet exemple (3) est un TPE comprenant par exemple une interface utilisateur (9), encore appelée IHM, destinée à afficher des messages à l'attention de l'utilisateur et à recevoir éventuellement des données.

Le terminal (1) selon l'invention est un dispositif portatif naturellement apte à recevoir des ondes porteuses radio, via une antenne, à travers le corps de l'utilisateur (2). A cette fin, le terminal (1) est situé à proximité immédiate de l'utilisateur (2), sans nécessairement être en contact direct avec celui-ci. Par exemple, le terminal (1) est placé à l'intérieur d'une poche ou d'un sac porté contre l'utilisateur. Dans ces configurations, on estime que le terminal (1) n'est pas éloigné de plus de quelques centimètres du corps de l'utilisateur (2). La distance est par exemple inférieure à 5 cm. Le terminal (1) est équipé d'une batterie ou de piles, pour un fonctionnement autonome. Il s'agit selon cet exemple d'un terminal mobile équipé d'une antenne NFC (non représentée) adaptée en mode CBB pour recevoir les signaux électriques modulés sous forme d'une onde électromagnétique à travers le corps de l'utilisateur lorsque celui-ci se trouve à proximité immédiate du dispositif maître. Selon un mode de réalisation préféré, le terminal comporte par ailleurs des moyens pour communiquer sur un second canal (4), par exemple Bluetooth ou Wi-Fi, avec le dispositif maître. Un tel terminal est décrit dans la demande publiée sous le numéro WO2017/093639. Selon un autre mode de réalisation, le terminal pourrait aussi être capable d'émettre des données vers le dispositif maître en utilisant un canal BCC. Un tel terminal est décrit dans la demande publiée sous le numéro WO2012/131224. Cependant dans la suite on utilisera un canal de retour de type Bluetooth car un tel canal permet avantageusement d'éviter l'utilisation de puissances trop élevées, donc dommageables pour le corps humain, qui seraient nécessaires pour obtenir des signaux exploitables sur les dispositifs maîtres en lecture. De surcroît, l'utilisation d'un canal Bluetooth (4) permet des débits et vitesses de transmission plus élevées que le CBB. Ceci permet aussi au dispositif maître de communiquer non seulement avec le terminal de l'utilisateur mais encore avec un autre terminal (e.g. une porte de garage à des fins d'ouverture, un téléviseur connecté, etc.) pour réaliser la transaction.

Selon un premier scénario, l'utilisateur (2) est par exemple dans un magasin et souhaite régler un achat à l'aide d'une carte bancaire dématérialisée située sur son terminal. Le dispositif maître est apte à établir avec le terminal mobile une communication sécurisée dans le but de valider la transaction monétaire ; l'utilisateur doit être authentifié, c'est-à-dire qu'à l'issue du procédé on est certain qu'il est bien le propriétaire du terminal.

Selon un autre scénario, l'utilisateur (2) est à son domicile et le dispositif maître est un objet connecté, posé par exemple sur un réfrigérateur, un TV, etc. L'objet connecté effectue des actions appropriées selon la personne qui vient de s'en approcher (remplissage, verrouillage, affichage, etc.) ; l'utilisateur doit être identifié c'est-à-dire qu'à l'issue du procédé on est capable de le discriminer parmi plusieurs personnes.

Dans les deux cas, le procédé selon l'invention procède en deux temps, ou phases distinctes :

### Première phase : apprentissage de l'empreinte caractéristique ou signature

Dans un premier temps, qui correspond à une phase dite d'apprentissage, l'utilisateur effectue plusieurs fois (dans la suite, N fois, où N est un entier naturel) un mouvement volontaire d'approche du lecteur associé au module d'apprentissage. On notera que pour cette étape, l'utilisateur n'est pas forcément dans le magasin. Le but de cette étape est de récupérer, de préférence sur le terminal (ou alternativement, sur un autre dispositif avec lequel le terminal est apte à échanger des données) une pluralité (N) de signaux qui correspondent aux signaux générés par la personne (2) lorsqu'elle pose autant de fois (N) sa main sur le lecteur. Ces signaux correspondent aux caractéristiques de l'utilisateur et de son geste, mais avec de petites variations, car l'utilisateur ne peut effectuer exactement toujours le même geste avec les mêmes paramètres mécaniques/dynamiques et ses paramètres physiologiques peuvent par ailleurs varier au cours du temps, entraînant une variation du signal propagé à travers le corps. De surcroît le terminal intervient aussi sur la forme du signal reçu. Néanmoins pour une personne donnée réalisant un mouvement volontaire caractéristique avec un terminal donné, tous les signaux sont de forme globale très similaire et représentent une sorte d'empreinte biométrique et comportementale de l'utilisateur, qu'on appellera par la suite « empreinte caractéristique » ou « signature » de l'utilisateur. L'empreinte caractéristique est donc représentative :
- du comportement, ou encore du mouvement volontaire effectué par l'utilisateur (MV) ; par exemple l'utilisateur peut approcher sa main du lecteur en effectuant un mouvement latéral, circulaire, avec des circonvolutions, poser plusieurs fois sa main ou certains de ses doigts, effectuer des tapotements, etc. Il peut de plus jouer sur des accélérations, décélérations, etc. Ainsi, chaque utilisateur peut avoir son propre mouvement, de préférence secret, appelé par la suite « mouvement volontaire de l'utilisateur » correspondant à son empreinte caractéristique ou signature.
- de ses caractéristiques intrinsèques ; en plus des paramètres biométriques comportementaux qui conditionnent la transmission du signal, certains facteurs biologiques, comme par exemple l'âge, la condition physique, le contrôle moteur, l'humidité des tissus du corps etc. de l'utilisateur peuvent influer sur ses caractéristiques de transmission. On pourra par exemple se référer à l'article « Intra-Body Communication Model Based on Variable Biological Parameters » (Khorshid et al., 2015, 49th Asilomar Conférence on Signals, Systems and Computers).
- des caractéristiques du terminal lui-même, et notamment de son circuit de réception CBB (caractéristiques et orientation de l'antenne, proximité du corps de l'utilisateur, etc.)

L'empreinte caractéristique (SIG), à la fois basée sur des éléments intrinsèques à la personne et sur son comportement, peut être obtenue par les N mesures légèrement différentes confiées à un module d'apprentissage chargé de calculer une « valeur moyenne », des différents signaux, ou signal type correspondant à l'empreinte caractéristique. Ce module est typiquement un module d'apprentissage automatique, en anglais « machine learning » (ML). On rappelle que l'apprentissage automatique, ou apprentissage statistique, concerne la conception, l'analyse, le développement et l'implémentation de méthodes permettant à une machine (au sens large) d'évoluer par un processus systématique, et ainsi de remplir des tâches difficiles ou problématiques par des moyens algorithmiques plus classiques. Un exemple possible d'apprentissage automatique est celui de la classification dont le but est d'étiqueter chaque donnée en l'associant à une classe. On peut aussi envisager d'utiliser des réseaux de neurones, etc.

Selon ce mode de réalisation, le module d'apprentissage calcule une empreinte caractéristique à partir des différents signaux d'un utilisateur (par exemple il réalise une moyenne de tous les essais valables, un ensemble de paramètres caractéristiques de l'empreinte, etc.). Puis il enregistre dans une base de données les empreintes d'utilisateurs éventuellement repérés par leurs identifiants. Une fois que l'apprentissage a été effectué, l'empreinte caractéristique résultante peut avantageusement être enregistrée sur le terminal de l'utilisateur. Si le terminal est utilisé par plusieurs utilisateurs, plusieurs empreintes caractéristiques peuvent être enregistrées, par exemple en liaison avec un identifiant de chaque utilisateur s'il est intéressant de les discriminer.

### Seconde phase : exploitation de l'empreinte caractéristique

Dans une seconde phase (de mise en œuvre du service), l'utilisateur du terminal mobile IBC qui souhaite valider une transaction s'approche du dispositif maître (3, par exemple une borne) et dirige sa main au-dessus de l'antenne, en rejouant son mouvement volontaire caractéristique. Lorsque le canal de communication est établi, le signal se propage de la borne (3) vers le mobile (1) de l'utilisateur, à travers son corps.

Un module de vérification du terminal ou lié au terminal (par exemple sur un serveur externe) vérifie l'empreinte caractéristique de l'utilisateur. Il est capable, typiquement, de comparer la courbe de signal type correspondant au mouvement volontaire à une courbe de signal correspondant à l'empreinte caractéristique, ou signature, de l'utilisateur, qui a été préalablement enregistrée sur le terminal ou dans une base de données accessible du terminal.

Si son empreinte caractéristique est reconnue, l'utilisateur est identifié ou authentifié et les deux dispositifs peuvent échanger toutes les données nécessaires à l'établissement, la poursuite et la conclusion du service (établissement d'un canal Bluetooth ou Wi-FI (4) pour échanger des données entre le terminal et le dispositif, débit d'argent, de ticket, personnalisation d'un équipement, etc.) On notera que, pendant cette seconde phase de validation, l'utilisateur a pu retirer sa main du lecteur et se déplacer. Dès que le mouvement volontaire a été détecté, il peut, selon une variante, en être informé par exemple via un signal sonore, afin qu'il puisse retirer la main du dispositif maître (3).

On rappelle que l'antenne intégrée au smartphone est portée par l'utilisateur. L'invention présente donc un avantage essentiel d'ergonomie et de sécurité en ce sens qu'elle permet à la personne souhaitant accéder à un service sécurisé d'être identifiée et/ou authentifiée via son empreinte caractéristique sans avoir à sortir son smartphone de sa poche ou de son sac, et sans rentrer de code confidentiel qui pourrait être subtilisé. L'utilisateur s'approprie l'utilisation du terminal en décidant de déclencher ou pas une action par son mouvement volontaire.

Cet exemple de réalisation a été donné à titre illustratif et nullement limitatif. De nombreuses variantes pourraient y être apportées. Notamment :
- un autre dispositif, par exemple un serveur externe, peut réaliser l'apprentissage et/ou la reconnaissance sur réception des données en provenance du terminal.
- on peut imaginer de modéliser le corps humain comme un canal de transmission caractérisable, c'est-à-dire qu'il peut être associé par exemple à une fonction de transfert, bien connue d'un homme du métier spécialiste du traitement des signaux. Dans ce cas, les caractéristiques de la fonction de transfert peuvent remplacer avantageusement les courbes précitées. Un exemple de telle modélisation est proposée par exemple dans l'article « Intra-Body Communication Model Based on Variable Biological Parameters » de Khorshid et al. cité plus haut.

Un dispositif terminal (1) selon l'invention va maintenant être décrit en relation avec la figure 2. Le terminal (1) est par exemple un terminal mobile de type *smartphone* adapté pour mettre en œuvre l'invention. Selon un autre exemple, le terminal est une simple carte électronique équipée des modules suivants :
- une unité de traitement, ou « CPU » (pour « Central Processing Unit »), destinée à charger des instructions en mémoire, à les exécuter, à effectuer des opérations ;
- un ensemble M de mémoires, dont une mémoire volatile, ou "RAM" (pour "Random Access Memory") utilisée pour exécuter des instructions de code, stocker des variables, etc. et une mémoire non volatile de type « ROM » (de l'anglais « Read Only Memory »), ou « EEPROM » (pour « Electronically Erasable Programmable Read Only Memory ») destinée à contenir des informations persistantes, notamment les données d'identification de l'utilisateur. Selon un mode de réalisation de l'invention, la mémoire M contient une zone mémoire (5), de préférence sécurisée, contenant l'empreinte caractéristique d'un utilisateur du terminal au moins.

- un module dit « Module IBC utilisateur », MIBCU, incluant :
   - une antenne CBB (ANT) adaptée pour recevoir des signaux sur la voie radio et via le corps humain, de manière à ce qu'un signal électrique modulé transporté par le corps de l'utilisateur soit apte à être reçu par l'antenne, qui se trouve dans le terminal, en proximité avec le corps humain ;
   - un démodulateur (DEMOD), destiné à recevoir via l'antenne un signal électrique modulé et à le transformer en un signal numérique destiné à être transmis à l'unité de traitement ;
   - les composantes logicielles (*firmware*, etc.) nécessaires à la mise en œuvre des communications CBB
- un module radio de type Bluetooth ou WiFi destiné à transmettre notamment des données en retour depuis le mobile vers un dispositif maître.
- de préférence, et notamment si ces modules ne sont pas mis en œuvre sur un autre dispositif :
   - un module de détection de geste volontaire, DGV pour analyser les signaux reçus par le module CBB et décider s'il s'agit ou non d'un signal correspondant à un mouvement comportant un geste volontaire (GV) de l'utilisateur.
   - un module de reconnaissance RECO pour analyser le signal reçu suite à un mouvement volontaire de l'utilisateur, établir un signal caractéristique à partir du signal analogique reçu, et établir une comparaison avec une signature de référence.
   - un module applicatif APPV pour valider ou non l'identité de l'utilisateur en fonction des résultats de la comparaison et lancer le service adéquat.
- de préférence, et notamment si ce modules n'est pas mis en œuvre sur un autre dispositif , une application (APPA) destinée à la mise en œuvre d'un procédé d'apprentissage selon des modes de réalisation de l'invention, notamment :
   - l'apprentissage des empreintes caractéristiques ;
   - un accès à une base de données d'empreintes caractéristiques (BDE, 4) contenant les empreintes d'un ou plusieurs utilisateurs potentiels du terminal.

On notera que ce module d'apprentissage et cette base ne sont pas nécessairement situés sur le terminal : ils peuvent être sur un serveur dans le cloud, sur le dispositif maître si l'on souhaite un fonctionnement centralisé, etc.

Un dispositif maître (3) selon l'invention va maintenant être décrit en relation avec la figure 3.

Le dispositif maître comprend plusieurs modules qui sont similaires à ceux du terminal 1 décrit en relation avec la figure 2 :
- une unité de traitement ou « CPU », destinée à charger des instructions en mémoire, à les exécuter, à effectuer des opérations.
- un ensemble de mémoires, dont une mémoire volatile ou "RAM" (pour "Random Access Memory") utilisée pour exécuter des instructions de code, stocker des variables, etc., et une mémoire non volatile, de type « ROM » ou « EEPROM » destinée à contenir des informations persistantes ;
- un module dit « Module IBC maître », MIBCM, incluant :
   - une antenne CBB (ANT) adaptée pour émettre des signaux sur la voie radio et via le corps humain, ;
   - un modulateur (MOD) destiné à adapter un signal numérique produit par le microprocesseur en un signal électrique modulé, destiné à être transmis, via l'antenne, à travers le corps de l'utilisateur. L'opération de modulation effectuée par le modulateur est par exemple une modulation d'amplitude : le signal est un signal à 13,56 MHz modulé en amplitude avec un taux de modulation d'environ 10% (caractéristique connue du type B selon la norme NFC). L'invention n'est cependant pas limitée à ce type de modulation. Dans un autre exemple de réalisation, la modulation est une modulation de fréquence, moins sensible aux parasites, ou, une modulation de phase ;
   - une surface de contact, non représentée, adaptée pour réagir à la proximité immédiate de l'utilisateur (contact, quasi-contact, effleurement, etc.). Dans l'exemple décrit ici, cette surface correspond à l'antenne, de manière à ce qu'un signal électrique modulé émis via l'antenne soit apte à être véhiculé par le corps de l'utilisateur qui est en proximité avec la surface. Dans un exemple de réalisation, l'antenne peut être intégrée dans la surface. La surface est agencée de manière à coopérer avec l'unité de traitement pour mettre en œuvre les étapes du procédé qui sera décrit ultérieurement ;
- un module radio de type Bluetooth ou Wi-Fi destiné notamment à recevoir des données en retour depuis le mobile (signaux reçus par le mobile, empreinte caractéristique, données relatives à la transaction, etc.) et/ou à rentrer en contact avec un autre dispositif pour valider la transaction (porte, objet connecté, etc.).
- les composantes logicielles (firmware, etc.) nécessaires à la mise en œuvre des communications IBC.
- optionnellement une interface utilisateur (IHM), adaptée pour transmettre à l'utilisateur des instructions ou des messages d'information. Par exemple, l'interface utilisateur est un écran sur lequel les messages et instructions sont affichés. Dans un autre exemple de réalisation, l'interface est une interface audio permettant de jouer les messages et instructions, par exemple pour signifier à l'utilisateur qu'il peut retirer sa main de la surface. L'IHM peut aussi comporter un clavier, un micro, etc.
- optionnellement, et notamment si ces modules ne sont pas présents sur les terminaux :
   - une application (APPA') destinée à la mise en œuvre d'un procédé d'apprentissage selon un mode de réalisation de l'invention, en relation avec une base de données d'empreintes caractéristiques (BDE, 5) ; sur la figure on a schématisé une base comprenant les empreintes caractéristiques (signatures, SIG) de deux utilisateurs A et B notées SIGA et SIGB.
   - un module de détection de geste volontaire, DGV' pour analyser les signaux reçus par le module CBB et décider si le mouvement comporte ou non un geste volontaire (GV) et
   - un module de reconnaissance RECO' pour analyser le signal reçu suite à un mouvement volontaire de l'utilisateur et le comparer aux signaux de la base d'empreintes caractéristiques.
   - une application (APPV') destinée à la mise en œuvre du procédé d'identification ou authentification selon des modes de réalisation de l'invention.

On rappelle que n'importe quel lecteur du commerce (par exemple un TPE) peut avantageusement être utilisé en tant que dispositif maître, à condition de bénéficier du module MIBCM, après une simple mise à jour du logiciel du lecteur (installation et/ou mise à jour de l'application et paramétrage de l'émission NFC) pour le rendre apte à émettre un message possédant les caractéristiques (fréquence, modulation, etc.) CBB via son antenne.

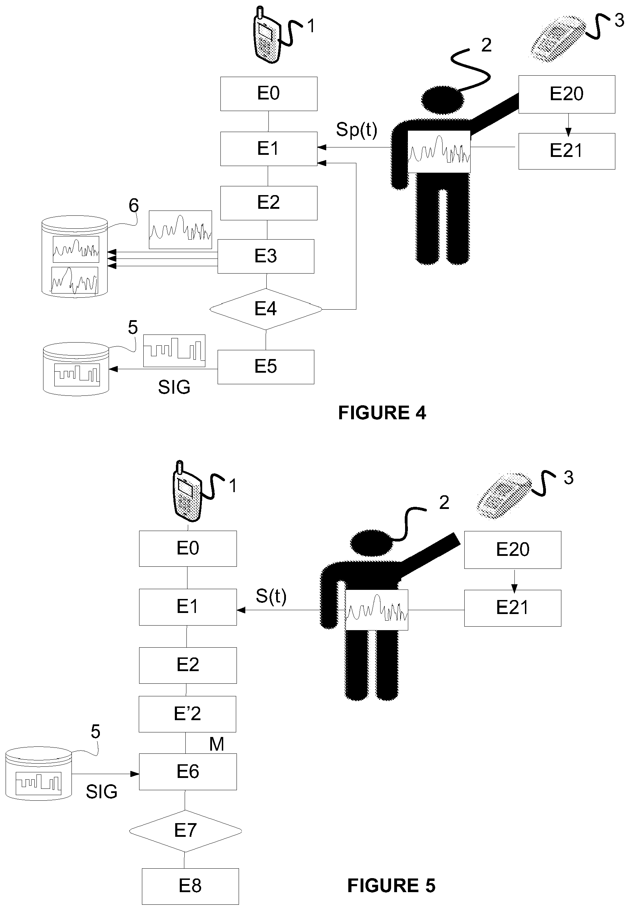

La figure 4 représente les étapes d'un procédé d'apprentissage selon un mode de réalisation de l'invention.

L'apprentissage est réalisé par répétition d'un mouvement volontaire (MV) correspondant à une suite de gestes volontaires (GV) au niveau d'un dispositif maître d'apprentissage. L'utilisateur se trouve par exemple dans une boutique d'un opérateur de télécommunications et s'apprête à enregistrer son empreinte caractéristique qui sera sa signature de référence, qu'il pourra utiliser par la suite lors de ses services CBB.

Selon ce mode de réalisation, la communication est unidirectionnelle, depuis le dispositif maître vers le terminal, et un canal de communication Bluetooth (4) est utilisé pour la communication depuis le mobile vers le dispositif maître d'apprentissage. Le terminal mobile, de type smartphone CBB, se trouve dans la poche de l'utilisateur.

On suppose ici que tous les prérequis nécessaires à la communication CBB ont été effectuées aux cours des étapes d'initialisation respectives E0 et E20, comme par exemple décrit dans la demande WO2017/093639, notamment la diffusion par le dispositif maître d'un message d'invite comportant éventuellement des paramètres relatifs au service offert (identifiant du service, aléa, qui permettra notamment d'effectuer l'appairage Bluetooth, etc.), le positionnement du terminal en mode de réception CBB, le lancement du programme d'apprentissage, etc.

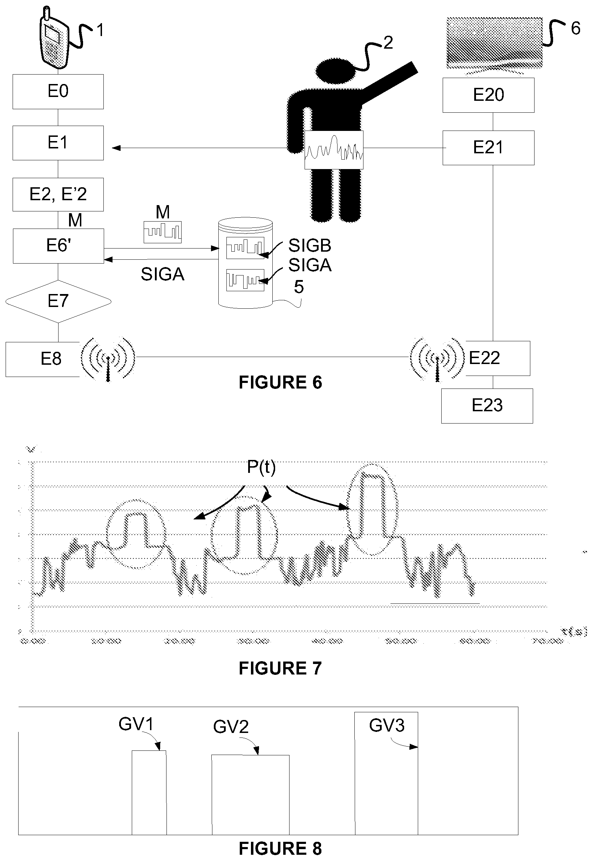

Lors d'une étape E1, l'utilisateur effectue son mouvement volontaire (MV) vers le dispositif maître (borne, TPE, etc.). Comme il sera détaillé plus tard à l'appui des figures 7 et 8, le mouvement volontaire correspond à un geste volontaire ou à une succession de plusieurs gestes volontaires (GV) effectués par l'utilisateur. Le mouvement volontaire est par exemple une suite de tapotements effectués avec une fréquence et une durée données et connues de l'utilisateur seul, le mouvement volontaire correspond à cette suite de tapotements et chacun des tapotements est un geste volontaire.

Lors d'une étape E21, la communication s'établit sur le canal IBC. La borne émet et le terminal reçoit le signal SP(t) transmis via le corps de l'utilisateur portant les caractéristiques du mouvement (MV).

Lors d'une étape E2, le terminal mobile reçoit, démodule et traite le signal reçu ; puis il tente de valider un geste volontaire de l'utilisateur, c'est-à-dire qu'il décide si le geste de l'utilisateur correspond ou non à un geste volontaire. Un tel procédé est décrit par exemple dans la demande de brevet WO2016/001506 du demandeur, précitée et résumée à l'appui de la figure 8. Un seul geste volontaire suffit à la validation (même si le mouvement comporte une succession de gestes volontaires).

Puis lors d'une étape E3, le terminal mémorise le signal dans une mémoire (représentée ici sous la forme d'une base de données (6) à titre d'exemple). Alternativement il peut aussi transmettre le signal, noté Sp(t), à un serveur d'apprentissage externe.

L'étape E4 correspond au test du nombre d'itérations N ; tant que le nombre souhaité d'itérations n'est pas atteint, le mobile demande à l'utilisateur de refaire le mouvement volontaire (étape E1) et reçoit un nouveau signal Sp(t) (étape E1) qu'il mémorise avec les autres signaux Sp(t) (étape E3). Par exemple, le compteur N est fixé à 3 et trois signaux S₁(t), S₂(t), S₃(t) valides doivent être reçus et enregistrés. Lorsque le nombre d'itérations souhaité est atteint, l'étape E4 sera suivie d'une étape E5 de calcul de l'empreinte caractéristique. On notera que le nombre N d'itérations peut être prédéfini (par exemple N=10) ou défini par l'algorithme lui-même : par exemple si les courbes Sp(t) sont trop différentes les unes des autres, selon un critère statistique (écart type, variance, etc.), le nombre N peut être augmenté ; si les courbes Sp(t) sont très proches, il peut être diminué.

Selon un exemple, l'algorithme suivant peut être utilisé :
- acquisition de deux signaux S₁(t), S₂(t), suite à deux mouvements valides de l'utilisateur
- calcul d'une distance entre les deux signaux, éventuellement corrigés et décalés dans le temps. Un tel exemple de calcul est classique pour l'homme du métier du traitement de signal : par exemple, une distance euclidienne peut être calculée entre deux premiers signaux préalablement alignés dans le temps, puis une deuxième distance calculée entre le troisième signal et la moyenne des deux premiers, etc. Il est aussi connu, pour comparer deux signaux entre eux, qu'ils soient analogiques ou numériques, de déterminer une fonction de corrélation entre ces deux signaux et de vérifier à partir des valeurs de cette fonction s'il y a identité ou non entre les signaux. On utilise classiquement pour cela des méthodes de calcul numérique de la fonction de corrélation.
- Si la distance est en dessous d'un certain seuil, calcul de la signature, sinon acquisition d'un troisième signal S₃(t) et calcul d'une distance entre les trois courbes, ou d'une distance entre chacune des courbes et une moyenne statistique des trois courbes, etc.
- etc.

Selon un autre exemple, un réseau de neurones peut être utilisé, comme décrit dans l'article « Authentification et Identification de Visages basées sur les Ondelettes et les Réseaux de Neurones. » de M.BELAHCENE-BENATIA Mébarka (Revue science des matériaux, Laboratoire LARHYSS N°02, Septembre 2014 pp.01-08). La méthode décrite, basée sur la transformation d'une image à deux dimensions d'un visage en un vecteur de taille N obtenu en enchaînant les lignes (ou colonnes) de l'image correspondante, suivie de l'établissement d'une matrice de covariance entre les différentes images, peut être facilement adaptée aux échantillons des signaux numériques issus des signaux Sp(t).

Lors de l'étape E5, le programme d'apprentissage calcule l'empreinte caractéristique à partir de tous (N) les signaux Sp(t) reçus. Toute méthode à la portée de l'homme du métier pour obtenir un signal représentatif des N signaux Sp(t) peut être utilisée, par exemple :
- il effectue une moyenne, ou
- il utilise un réseau de neurones (convolutionnels) pour apprendre à reconnaître l'utilisateur, ou
- il utilise un système SVM (*Support Vector Machine*) pour classer les différents signaux reçus en les mettant dans le sous-ensemble correspondant aux signaux de l'utilisateur,
- etc.

L'empreinte caractéristique peut prendre typiquement la forme d'un signal analogique ou numérique, c'est-à-dire une fonction représentant les variations du signal correspondant au mouvement moyen de l'utilisateur sur un intervalle de temps, par exemple quelques secondes. Un tel signal est représenté à titre d'exemple à la figure 8. Un exemple de signal Sp(t) correspondant est montré à la figure 7. Alternativement, l'empreinte caractéristique pourrait prendre la forme de tout ensemble de données caractéristiques du signal généré par le mouvement de l'utilisateur, dépendant à la fois, comme expliqué plus haut, du geste volontaire lui-même, des caractéristiques biologiques de l'utilisateur, et des caractéristiques du terminal :
- ensemble de données numériques ;
- index dans un dictionnaire existant de signatures correspondant par exemple à des mouvements de base d'un utilisateur du système (tapotement, balayage, etc.)
- fonction de transfert d'un canal correspondant au corps de l'utilisateur ; on notera à ce propos que l'onde électromagnétique se propage sur la surface du corps humain quand l'utilisateur (2) établit un contact. Il n'existe pas à ce jour de modélisation complète fidèle de ce transfert dans le corps humain à la fréquence de travail. Cependant des expériences ont été réalisées pour avoir des modèles expérimentaux, comme reporté dans l'article « Expérimental Studies on Human Body Channel Communication Characteristics Based upon Capacitive Coupling. » (Wang et al. Proceedings of 2011 International Conférence on Body Sensor Networks (BSN), Dallas, TX, USA, 23-25 May 2011; pp. 180-185). Des modélisations simplifiées d'une partie du corps (bras, torse, abdomen et jambes) sont également connues et pourraient permettre dans un futur proche d'obtenir une modélisation complète du corps humain. On pourra se reporter par exemple à l'article "Electric-field intrabody communication channel modeling with finite element method" (Xu et al., IEEE Trans. Biomed. Eng., vol. 58, no. 3, pp. 705-712, Mar. 2011)
- etc.

L'empreinte caractéristique ainsi calculée, ou signature de référence, est stockée dans une mémoire, ou base de données (5), soit dans le mobile, soit dans une base de données d'empreintes, avec de préférence un identifiant de l'utilisateur (par exemple son nom, sa date de naissance, son numéro de téléphone, l'adresse MAC de son terminal, son numéro de compte bancaire, etc.).

Selon un autre mode de réalisation non représenté, c'est le dispositif maître (borne) qui calcule l'empreinte caractéristique. Dans ce cas, l'étape E1 de récupération du signal ou E2 de reconnaissance d'un geste volontaire par le mobile peut être suivie d'une étape de retransmission de ce signal vers le dispositif maître, via le canal Bluetooth.

La figure 5 représente les étapes d'un procédé d'authentification d'un utilisateur selon un premier mode de réalisation de l'invention.

Dans ce mode, l'utilisateur effectue un mouvement volontaire en direction d'un dispositif maître (TPE) pour valider une transaction par exemple monétaire. Si la procédure réussit, l'utilisateur est authentifié, c'est-à-dire qu'il est reconnu comme étant le propriétaire du terminal.

On suppose ici, de même que précédemment, que tous les prérequis nécessaires à la communication CBB ont été effectuées aux cours des étapes respectives E0 et E20. On suppose aussi que la phase d'apprentissage décrite précédemment à l'appui de la figure 5 a été effectuée et que l'empreinte caractéristique de l'utilisateur se trouve sur le terminal mobile (on rappelle qu'elle pourrait être localisée ailleurs, dans une base de données externe au terminal). On rappelle que le mouvement volontaire (MV) est secret et correspond à la signature de l'utilisateur (SIG) enregistrée dans la base sous forme analogique, numérique, ou autre. Le signal (noté S(t)) est transporté via le corps de l'utilisateur jusqu'au terminal.

Les étapes E1 (mouvement volontaire de l'utilisateur), E21 (établissement de la communication sur le canal IBC et transmission d'un signal S(t) portant les caractéristiques du mouvement volontaire) et E2 (traitement du signal reçu et détection d'un geste volontaire), sont similaires aux étapes correspondantes décrites précédemment à l'appui de la figure 4.

Lors d'une étape E'2, le procédé établit une courbe caractéristique du mouvement (M) à partir du signal reçu, éventuellement traité lors de l'étape précédente.

Puis lors d'une étape de test E6, le terminal accède à la mémoire (ou base de données) pour lire la signature de l'utilisateur. Si la mémoire accédée ne se trouve pas sur le terminal mais par exemple dans le cloud (ou sur le dispositif maître), un canal Bluetooth de retour pourra être utilisé avantageusement pour y accéder.

Dans une étape suivante E7 de comparaison, le signal reçu et traité (M) est comparé à la signature (SIG) de l'utilisateur. Ceci permet de s'assurer que c'est bien l'utilisateur qui porte le terminal mobile qui a posé la main sur la borne, autrement dit cette étape effectue une authentification du porteur. Plusieurs types de comparaison peuvent être effectués :
- calcul de « distance » entre la courbe caractéristique du mouvement (M) et l'empreinte (SIG) stockée dans la base. Si la distance entre les deux signaux est inférieure à un seuil, l'utilisateur est authentifié le service peut être lancé. On peut faire par exemple une corrélation point à point entre les 2 signaux (le signal candidat reçu et le signal correspondant à l'empreinte caractéristique) en calculant une différence de chaque valeur des 2 courbes, en déplaçant éventuellement le signal reçu sur le signal de référence. La valeur minimale obtenue doit être proche de zéro si les 2 courbes sont très semblables.
- l'utilisation de réseaux de neurones (normaux ou convolutionnels), où un système multi-couches de neurones apprend en ajustant ses poids internes à reconnaître une personne à partir du signal obtenu. Une telle approche est décrite par exemple dans l'article de Mébarka précité.
- etc.

A l'issue de cette étape de comparaison, si le signal reçu correspond à la signature, l'utilisateur est authentifié et l'étape E7 peut être suivie d'une étape E8 de mise en œuvre de la transaction, par exemple la validation d'un paiement. Dans le cas contraire, c'est-à-dire si le mouvement volontaire ne correspond pas à la signature, on peut par exemple revenir à l'étape E1 et demander à l'utilisateur de refaire le mouvement volontaire. Selon une variante, un nombre d'essais prédéfinis (par exemple 3) peut être autorisé avant l'annulation de la transaction.

La figure 6 représente les étapes d'un procédé d'identification selon un second mode de réalisation de l'invention.

Dans ce mode, l'utilisateur effectue un mouvement volontaire en direction d'un dispositif maître pour être identifié et lancer un service personnalisé, par exemple la lecture d'une chaîne de télévision préférée. Si la procédure réussit, l'utilisateur est identifié, c'est-à-dire qu'il est reconnu comme étant un utilisateur donné (A ou B) et le service correspondant peut accéder à son profil et prendre une action appropriée (lancer la chaîne A pour A ou la chaîne B pour B). Par exemple un téléviseur connecté est équipé du dispositif maître (une borne CBB) et le terminal (ou le téléviseur) peut accéder à une base de données (ou mémoire) comprenant toutes les signatures des utilisateurs de la maison (A, B, C, D, etc.).

On suppose ici, de même que précédemment, que tous les prérequis nécessaires à la communication CBB ont été effectuées aux cours des étapes respectives E0 et E20. On suppose aussi que la phase d'apprentissage décrite précédemment à l'appui de la figure 5 a été effectuée par chacun des utilisateurs et que l'empreinte caractéristique de chaque utilisateur se trouve sur son terminal mobile ou est du moins accessible depuis son terminal mobile. Alternativement, plusieurs signatures correspondant aux utilisateurs d'un terminal multi-utilisateurs peuvent être stockées sur le terminal (par exemple une tablette), ou dans une base de données externe.

Lorsque l'utilisateur A effectue son mouvement volontaire (correspondant à sa signature), le signal électromagnétique (noté S(t)) est transporté via son corps jusqu'au terminal qui se trouve dans sa poche.

Les étapes E1 (mouvement volontaire de l'utilisateur), E21 (établissement de la communication sur le canal CBB et transmission d'un signal S(t) portant les caractéristiques du mouvement volontaire), E2 (validation d'un geste volontaire) et E'2 (établissement de la courbe M caractéristique du mouvement) sont similaires aux étapes correspondantes décrites précédemment à l'appui des figures 4 et 5.

L'étape E6' diffère de l'étape E6 précédemment décrite en ce que le signal caractéristique M issu de l'étape E'2 doit être comparé aux empreintes caractéristiques stockées dans la base de données.
- si le message M n'est pas accompagné d'un identifiant, le procédé devra analyser au cours de cette étape toutes les signatures de la base avant de trouver celle qui correspond à l'utilisateur ; s'il en trouve une pour laquelle la différence avec le signal M est faible (i.e. inférieure à un seuil donné), alors cette empreinte est déclarée comme étant celle de l'utilisateur. Comme auparavant, plusieurs types de comparaison/calculs de distances peuvent être effectuées, et notamment celles décrites dans l'article précité de Mébarka, en remplaçant les visages (de l'article) par les signatures de référence correspondant aux mouvements volontaires des différents utilisateurs. Dans ce cas, à l'issue de l'étape E7, le procédé pourra fournir par exemple la signature (SIGA) la plus proche du message M.
- si au contraire le message M est accompagné d'un identifiant, il suffira d'accéder directement dans la base à la signature correspondant à cet identifiant. L'étape E7 est similaire à celle de la figure 5 : la « meilleure signature » peut être comparée au message M, et une distance/similitude calculée entre les deux.

Si un mouvement volontaire correspondant à la signature sélectionnée a été validé lors de l'étape E7, le dispositif de reconnaissance a donc identifié un utilisateur du terminal, un canal Bluetooth peut être ouvert entre les deux dispositifs au cours des étapes E8 et E22, pour retransmettre via ce canal au téléviseur connecté (ou au dispositif maître) un identifiant de l'utilisateur (nom, prénom, âge, numéro, etc.) ou encore le numéro de chaîne favori de l'utilisateur après lecture du profil correspondant. Sinon, il n'ouvre pas le canal de communication, et le procédé peut reprendre éventuellement à l'étape E1/E21.

Lors d'une étape E23 le téléviseur peut rendre le service demandé, c'est-à-dire selon cet exemple sélectionner le profil de l'utilisateur identifié (par exemple A) et lancer la chaîne A correspondant au profil, ou lancer directement la chaîne si le terminal lui en a transmis la référence.

La figure 7 représente un exemple de signal (S(t)) correspondant à un mouvement volontaire d'un utilisateur.

Par mouvement volontaire (MV), on entend ici un ensemble de gestes volontaires (GV) réalisés par l'utilisateur dans le but de construire une empreinte caractéristique, et par la suite de valider une transaction électronique grâce à cette empreinte.

La figure 7 montre un signal démodulé enregistré par l'antenne lors d'un test réalisé sur une minute.

Si on souhaite effectuer un geste volontaire, on se positionne devant le dispositif maître IBC. On observe un palier bas constant avec des oscillations en cas d'absence de mouvement devant le lecteur. Si on effectue un geste volontaire, on observe alors un palier haut qui reste constant tant que la main est posée sur le lecteur. L'algorithme de détection de geste volontaire doit donc détecter un enchaînement de type « palier bas, palier haut, palier bas». Une telle détection de geste volontaire a été décrite dans la demande WO2016/001506 du demandeur. En résumé, l'algorithme adopte les étapes suivantes :
- échantillonnage par le microcontrôleur ;
- lissage du signal ;
- dérivation du signal lissé ;
- détection, grâce au signal dérivé, de la présence de deux pics séparés, le premier correspondant au front montant et le second au front descendant du signal de part et d'autre du palier haut.
- vérification de la durée entre les deux pics, correspondant à la largeur du palier haut et donc au temps où l'utilisateur a laissé sa main sur le lecteur (par exemple, entre 1,5 s et 3s).
- si toutes les conditions sont remplies pour décider que l'on a affaire à un palier haut, on décide que l'on est en présence d'un geste volontaire.

Le signal représenté sur la figure 7 correspond ainsi à trois gestes volontaires successifs réalisés par l'utilisateur. Le mouvement volontaire de l'utilisateur est donc selon cet exemple constitué de trois gestes volontaires successifs d'un écartement et d'une durée caractéristiques (qui peuvent correspondre à 3 tapotements de durée et d'amplitude différentes) interprétables sur la courbe du signal S(t).

La figure 8 représente une empreinte caractéristique correspondant à un mouvement d'un utilisateur.

On suppose que le procédé selon l'invention a récupéré et stocké N signaux comparables à celui de la figure 7. A partir de ces N signaux, une empreinte caractéristique, ou signature, peut être calculée, qui peut prendre par exemple l'allure du signal représenté à la figure 8 : le mouvement caractéristique de l'utilisateur est constitué de trois gestes volontaires (GV1, GV2, GV3) représentés par les trois paliers (ou créneaux) successifs correspondant aux créneaux P(t) du signal de la figure 7. Il peut s'agir par exemple d'un tapotement réalisé sur la surface de l'antenne.

Il va de soi que le mode de réalisation qui a été décrit ci-dessus a été donné à titre purement indicatif et nullement limitatif, et que de nombreuses modifications peuvent être facilement apportées par l'homme de l'art sans pour autant sortir du cadre de l'invention tel que défini par les présentes revendications.

## Revendications

1. Procédé de reconnaissance d'un utilisateur (2) porteur d'un terminal (1), ledit terminal étant apte à recevoir un signal radio de type NFC (S(t)) en provenance d'un dispositif maître (3) muni d'une antenne (CBB) apte à émettre le signal, ledit signal (S(t)) étant destiné à être transmis entre le dispositif maître et le terminal sur un premier canal en utilisant des capacités de conduction d'onde électromagnétique du corps de l'utilisateur lorsqu'au moins une partie du corps de l'utilisateur telle que sa main se trouve à proximité de l'antenne, ledit utilisateur étant apte à réaliser un mouvement caractérisant le signal transmis (S(t)), le procédé étant **caractérisé en ce qu'**il comporte les étapes de :
- réception (E1) sur le terminal du signal (S(t)) en provenance du dispositif maître (3) ;
- génération (E2, E'2) d'une première donnée caractéristique du mouvement (M) par une analyse du signal reçu (S(t)) ;
- obtention (E6, E6') d'au moins une seconde donnée caractéristique (SIG, SIG A, SIGB), dite signature de référence ;
- comparaison (E7) de la première donnée caractéristique avec ladite au moins une signature (SIGA, SIGB) de référence ;
- en fonction des résultats de la comparaison, reconnaissance (E8) de l'utilisateur.

2. Procédé de reconnaissance selon la revendication 1 **caractérisé en ce que** ladite au moins une signature de référence est associée à un profil d'un utilisateur et **en ce que** l'étape de reconnaissance (E8) est suivie d'une étape de sélection (E23) du profil de l'utilisateur reconnu.

3. Procédé de reconnaissance selon la revendication 1 **caractérisé en ce que** l'étape de reconnaissance est suivie d'une étape d'établissement (E8, E22) d'une communication radio sur un second canal (4) n'utilisant pas des capacités de conduction d'onde électromagnétique du corps de l'utilisateur.

4. Procédé de reconnaissance selon la revendication 1 **caractérisé en ce que** l'étape de génération d'une première donnée (M(t)) caractéristique du mouvement comporte une sous-étape de détection d'un palier (P(t)) au moins correspondant à un geste volontaire (GV) de l'utilisateur.

5. Procédé de reconnaissance selon la revendication 1 **caractérisé en ce que** l'étape de génération d'une première donnée (M(t)) caractéristique du mouvement comporte les sous-étapes suivantes :
- numérisation du signal (S(t)) reçu ;
- détection (E2) dans le signal numérique d'au moins un front montant et un front descendant correspondant à au moins un palier (P(t));
- génération (E'2) de la première donnée caractéristique (M(t)) sous la forme d'un signal numérique comportant au moins ledit palier.

6. Procédé de reconnaissance selon la revendication 1 **caractérisé en ce que** l'étape de comparaison (E7) comporte les sous-étapes suivantes, après compensation d'un éventuel décalage entre la première donnée caractéristique (M(t)) et la signature de référence (SIG, SIGA, SIGB) :
- mesure d'une distance entre la première donnée caractéristique (M) et la signature de référence (SIG);
- validation de la comparaison en fonction de la distance mesurée.

7. Procédé d'apprentissage d'une signature de référence (SIG, SIGA, SIGB) d'un utilisateur (2) porteur d'un terminal (1), ledit terminal étant apte à recevoir un signal radio (Sp(t)) en provenance d'un dispositif maître (3) muni d'une antenne apte à émettre le signal, ledit signal (Sp(t)) étant destiné à être transmis entre le dispositif maître et le terminal en utilisant des capacités de conduction d'onde électromagnétique du corps de l'utilisateur lorsqu'au moins une partie du corps de l'utilisateur telle que sa main se trouve à proximité de l'antenne, ledit utilisateur étant apte à réaliser un mouvement caractérisant le signal transmis (Sp(t)),le procédé étant **caractérisé en ce qu'**il comporte les étapes de :
- réception (E1) d'une pluralité de signaux (Sp(t)) en provenance du dispositif maître (3) ;
- génération (E5) d'une donnée caractéristique, dite signature de référence (SIG, SIGA, SIGB) par une analyse de la pluralité de signaux (Sp(t)) reçus ;
- enregistrement (E5) de ladite signature (SIG, SIGA, SIGB) en tant que signature de référence de l'utilisateur (2).

8. Procédé d'apprentissage selon la revendication 7, **caractérisé en ce qu'**il comporte en outre une étape d'obtention du nombre nécessaire (N) de signaux de ladite pluralité de signaux.

9. Procédé d'apprentissage selon la revendication 8 **caractérisé en ce que** l'étape d'obtention du nombre nécessaire (N) de signaux comporte les sous-étapes suivantes :
- obtention d'une pluralité de signaux caractéristiques (SP(t)) ;
- calcul d'une distance entre lesdits signaux de la pluralité de signaux ;
- en fonction de la distance calculée, obtention d'un nouveau signal caractéristique à ajouter à la pluralité de signaux caractéristiques.

10. Dispositif de vérification d'une signature **caractérisé en ce qu'**il comporte les modules suivants :
- un module (MIBCU, RECO) de réception d'une première donnée caractéristique (M(t)) d'un mouvement ;
- un module d'obtention (RECO) d'au moins une seconde donnée caractéristique (SIG), dite signature ;
- un module de comparaison (RECO) de la première donnée caractéristique avec ladite au moins une signature (SIG) ;
- un module de communication (RECO) d'un résultat de la comparaison.

11. Terminal (1) porté par un utilisateur, ledit terminal étant apte à recevoir un signal radio de type NFC (S(t)) en provenance d'un dispositif maître (3) muni d'une antenne (CBB) apte à émettre le signal, ledit signal (S(t)) étant destiné à être transmis entre le dispositif maître et le terminal en utilisant des capacités de conduction d'onde électromagnétique du corps de l'utilisateur lorsqu'au moins une partie du corps de l'utilisateur telle que sa main se trouve à proximité de l'antenne, ledit utilisateur étant apte à réaliser un mouvement caractérisant le signal transmis S(t), le terminal étant **caractérisé en ce qu'**il comporte les modules suivants :
- un module (MIBCU) de réception dudit signal (S(t)) en provenance du dispositif maître (3) ;
- un module de génération (DGV, RECO) d'une première donnée caractéristique (M(t)) du mouvement par une analyse du signal reçu (S(t)) ;
- un module d'obtention (APPV) d'un résultat de comparaison de la première donnée caractéristique avec au moins une signature (SIG) de référence ;
- un module de reconnaissance (APPV) de l'utilisateur, en fonction du résultat de la comparaison.

12. Système de reconnaissance d'un utilisateur comprenant :
- un dispositif (3), dit dispositif maître, muni d'une antenne apte à émettre un signal de type NFC (S(t)) destiné à être transmis entre le dispositif maître et au moins un terminal en utilisant des capacités de conduction d'onde électromagnétique du corps de l'utilisateur lorsqu'au moins une partie du corps de l'utilisateur telle que sa main se trouve à proximité de l'antenne, ledit utilisateur étant apte à réaliser un mouvement caractérisant le signal transmis (S(t)),
- au moins un terminal d'un l'utilisateur, selon la revendication 11, comprenant un dispositif de vérification d'une signature selon la revendication 10.
**caractérisé en ce que** ledit dispositif transmet un signal caractéristique dudit mouvement, reçu par le module de réception du terminal de l'utilisateur.

13. Dispositif d'apprentissage d'une signature de référence (SIG) d'un utilisateur (2) porteur d'un terminal (1), ledit terminal étant apte à recevoir un signal radio de type NFC (Sp(t)) en provenance d'un dispositif maître (3) muni d'une antenne apte à émettre le signal (Sp(t)), ledit signal (Sp(t)) étant destiné à être transmis entre le dispositif maître et le terminal en utilisant des capacités de conduction d'onde électromagnétique du corps de l'utilisateur lorsqu'au moins une partie du corps de l'utilisateur telle que sa main se trouve à proximité de l'antenne, ledit utilisateur étant apte à réaliser un mouvement caractérisant le signal transmis (Sp(t)), **caractérisé en ce que** le dispositif d'apprentissage comporte les modules suivants :
- un module de réception (MIBCU) d'une pluralité de signaux (Sp(t)) en provenance du dispositif maître (3) ;
- un module de génération (APPA) d'une donnée caractéristique, dite signature (SIG) par une analyse de la pluralité de signaux (Sp(t)) reçus ;
- un module d'enregistrement (APPA) de ladite signature (SIG) en tant que signature de référence de l'utilisateur (2).

14. Terminal comprenant un dispositif d'apprentissage d'une signature selon la revendication 13.

15. Programme d'ordinateur apte à être mis en œuvre sur un terminal tel que défini dans la revendication 11 ou 14, le programme comprenant des instructions de code qui, lorsque le programme est exécuté par un processeur, réalise les étapes du procédé de reconnaissance selon la revendication 1 et/ou du procédé d'apprentissage selon la revendication 7.

## Patentansprüche

1. Verfahren zur Erkennung eines ein Endgerät (1) tragenden Benutzers (2), wobei das Endgerät fähig ist, ein Funksignal des Typs NFC (S(t)) von einer Master-Vorrichtung (3) zu empfangen, die mit einer Antenne (CBB) versehen ist, die fähig ist, das Signal zu senden, wobei das Signal (S(t)) dazu bestimmt ist, unter Verwendung von Fähigkeiten des Körpers des Benutzers zum Leiten einer elektromagnetischen Welle auf einem ersten Kanal zwischen der Master-Vorrichtung und dem Endgerät übertragen zu werden, wenn mindestens ein Teil des Körpers des Benutzers wie seine Hand sich in der Nähe der Antenne befindet, wobei der Benutzer fähig ist, eine Bewegung auszuführen, die das übertragene Signal (S(t)) charakterisiert, wobei das Verfahren **dadurch gekennzeichnet ist, dass** es die folgenden Schritte aufweist:
- Empfang (E1) des von der Master-Vorrichtung (3) kommenden Signals (S(t)) auf dem Endgerät;
- Erzeugung (E2, E'2) eines ersten charakteristischen Datenwerts der Bewegung (M) durch eine Analyse des empfangenen Signals (S(t));
- Erhalt (E6, E6') mindestens eines zweiten charakteristischen Datenwerts (SIG, SIGA, SIGB), Bezugssignatur genannt;
- Vergleich (E7) des ersten charakteristischen Datenwerts mit der mindestens einen Bezugssignatur (SIGA, SIGB);
- abhängig von den Ergebnissen des Vergleichs, Erkennen (E8) des Benutzers.

2. Erkennungsverfahren nach Anspruch 1, **dadurch gekennzeichnet, dass** die mindestens eine Bezugssignatur einem Profil eines Benutzers zugeordnet ist, und dass auf den Erkennungsschritt (E8) ein Auswahlschritt (E23) des Profils des erkannten Benutzers folgt.

3. Erkennungsverfahren nach Anspruch 1, **dadurch gekennzeichnet, dass** auf den Erkennungsschritt ein Aufbauschritt (E8, E22) einer Funkverbindung auf einem zweiten Kanal (4) folgt, der keine Fähigkeiten des Körpers des Benutzers zum Leiten einer elektromagnetischen Welle verwendet.

4. Erkennungsverfahren nach Anspruch 1, **dadurch gekennzeichnet, dass** der Erzeugungsschritt eines ersten charakteristischen Datenwerts (M(t)) der Bewegung einen Teilschritt der Erfassung mindestens einer Phase (P(t)) aufweist, die einer absichtlichen Geste (GV) des Benutzers entspricht.

5. Erkennungsverfahren nach Anspruch 1, **dadurch gekennzeichnet, dass** der Erzeugungsschritt eines ersten charakteristischen Datenwerts (M(t)) der Bewegung die folgenden Teilschritte aufweist:
- Digitalisierung des empfangenen Signals (S(t));
- Erfassung (E2) im digitalen Signal mindestens einer ansteigenden Flanke und einer absteigenden Flanke entsprechend mindestens einer Phase (P(t));
- Erzeugung (E'2) des ersten charakteristischen Datenwerts (M(t)) in Form eines digitalen Signals, das mindestens die Phase aufweist.

6. Erkennungsverfahren nach Anspruch 1, **dadurch gekennzeichnet, dass** der Vergleichsschritt (E7) die folgenden Teilschritte aufweist, nach Kompensation einer möglichen Verschiebung zwischen dem ersten charakteristischen Datenwert (M(t)) und der Bezugssignatur (SIG, SIGA, SIGB):
- Messen eines Abstands zwischen dem ersten charakteristischen Datenwert (M) und der Bezugssignatur (SIG);
- Validierung des Vergleichs abhängig vom gemessenen Abstand.

7. Lernverfahren einer Bezugssignatur (SIG, SIGA, SIGB) eines ein Endgerät (1) tragenden Benutzers (2), wobei das Endgerät fähig ist, ein Funksignal (Sp(t)) zu empfangen, das von einer Master-Vorrichtung (3) kommt, die mit einer Antenne versehen ist, die fähig ist, das Signal zu senden, wobei das Signal (Sp(t)) dazu bestimmt ist, unter Verwendung von Fähigkeiten des Körpers des Benutzers zum Leiten einer elektromagnetischen Welle zwischen der Master-Vorrichtung und dem Endgerät übertragen zu werden, wenn mindestens ein Teil des Körpers des Benutzers wie seine Hand sich in der Nähe der Antenne befindet, wobei der Benutzer fähig ist, eine das übertragene Signal (Sp(t)) charakterisierende Bewegung auszuführen, wobei das Verfahren **dadurch gekennzeichnet ist, dass** es die folgenden Schritte aufweist:
- Empfang (E1) einer Vielzahl von Signalen (Sp(t)) von der Master-Vorrichtung (3);
- Erzeugung (ES) eines charakteristischen Datenwerts, Bezugssignatur genannt (SIG, SIGA, SIGB), durch eine Analyse der Vielzahl von empfangenen Signalen (Sp(t));
- Speichern (ES) der Signatur (SIG, SIGA, SIGB) als Bezugssignatur des Benutzers (2).

8. Lernverfahren nach Anspruch 7, **dadurch gekennzeichnet, dass** es außerdem einen Schritt des Erhalts der notwendigen Anzahl (N) von Signalen der Vielzahl von Signalen enthält.

9. Lernverfahren nach Anspruch 8, **dadurch gekennzeichnet, dass** der Schritt des Erhalts der notwendigen Anzahl (N) von Signalen die folgenden Teilschritte aufweist:
- Erhalt einer Vielzahl charakteristischer Signale (SP(t));
- Berechnung eines Abstands zwischen den Signalen der Vielzahl von Signalen;
- abhängig vom berechneten Abstand, Erhalt eines neuen charakteristischen Signals, das der Vielzahl von charakteristischen Signalen hinzuzufügen ist.

10. Überprüfungsvorrichtung einer Signatur, **dadurch gekennzeichnet, dass** sie die folgenden Module aufweist:
- ein Modul (MIBCU, RECO) zum Empfang eines ersten charakteristischen Datenwerts (M(t)) einer Bewegung;
- ein Modul zum Erhalt (RECO) mindestens eines zweiten charakteristischen Datenwerts (SIG), Signatur genannt;
- ein Modul des Vergleichs (RECO) des ersten charakteristischen Datenwerts mit der mindestens einen Signatur (SIG);
- ein Kommunikationsmodul (RECO) eines Ergebnisses des Vergleichs.

11. Endgerät (1), das von einem Benutzer getragen wird, wobei das Endgerät fähig ist, ein Funksignal des Typs NFC (S(t)) von einer Master-Vorrichtung (3) zu empfangen, die mit einer Antenne (CBB) versehen ist, die fähig ist, das Signal zu senden, wobei das Signal (S(t)) dazu bestimmt ist, unter Verwendung von Fähigkeiten des Körpers des Benutzers zum Leiten einer elektromagnetischen Welle zwischen der Master-Vorrichtung und dem Endgerät übertragen zu werden, wenn mindestens ein Teil des Körpers des Benutzers wie seine Hand sich in der Nähe der Antenne befindet, wobei der Benutzer fähig ist, eine Bewegung auszuführen, die das übertragene Signal (S(t)) charakterisiert, wobei das Endgerät **dadurch gekennzeichnet ist, dass** es die folgenden Module aufweist:
- ein Modul (MIBCU) zum Empfang des Signals (S(t)) von der Master-Vorrichtung (3);
- ein Modul zur Erzeugung (DGV, RECO) eines ersten charakteristischen Datenwerts (M(t)) der Bewegung durch eine Analyse des empfangenen Signals (S(t));
- ein Modul zum Erhalt (APPY) eines Vergleichsergebnisses des ersten charakteristischen Datenwerts mit mindestens einer Bezugssignatur (SIG);
- ein Modul zur Erkennung (APPY) des Benutzers, abhängig vom Ergebnis des Vergleichs.

12. System zur Erkennung eines Benutzers, das enthält:
- eine Vorrichtung (3), Master-Vorrichtung genannt, die mit einer Antenne versehen ist, die fähig ist, ein Signal des Typs NFC (S(t)) zu senden, das dazu bestimmt ist, unter Verwendung von Fähigkeiten des Körpers des Benutzers zum Leiten einer elektromagnetischen Welle zwischen der Master-Vorrichtung und mindestens einem Endgerät übertragen zu werden, wenn mindestens ein Teil des Körpers des Benutzers wie seine Hand sich in der Nähe der Antenne befindet, wobei der Benutzer fähig ist, eine das übertragene Signal (S(t)) charakterisierende Bewegung durchzuführen,
- mindestens ein Endgerät eines des Benutzers, nach Anspruch 11, das eine Überprüfungsvorrichtung einer Signatur nach Anspruch 10 enthält,
**dadurch gekennzeichnet, dass** die Vorrichtung ein charakteristisches Signal der Bewegung überträgt, das vom Empfangsmodul des Endgeräts des Benutzers empfangen wird.

13. Lernvorrichtung einer Bezugssignatur (SIG) eines ein Endgerät (1) tragenden Benutzers (2), wobei das Endgerät fähig ist, ein Funksignal des Typs NFC (Sp(t)) von einer Master-Vorrichtung (3) zu empfangen, die mit einer Antenne (CBB) versehen ist, die fähig ist, das Signal zu senden, wobei das Signal (Sp(t)) dazu bestimmt ist, unter Verwendung von Fähigkeiten des Körpers des Benutzers zum Leiten einer elektromagnetischen Welle zwischen der Master-Vorrichtung und dem Endgerät übertragen zu werden, wenn mindestens ein Teil des Körpers des Benutzers wie seine Hand sich in der Nähe der Antenne befindet, wobei der Benutzer fähig ist, eine Bewegung auszuführen, die das übertragene Signal (Sp(t)) charakterisiert, **dadurch gekennzeichnet, dass** die Lernvorrichtung die folgenden Module aufweist:
- ein Modul zum Empfang (MIBCU) einer Vielzahl von Signalen (Sp(t)) von der Master-Vorrichtung (3);
- ein Modul zur Erzeugung (APPA) eines charakteristischen Datenwerts, Signatur (SIG) genannt, durch eine Analyse der Vielzahl von empfangenen Signalen (Sp(t));
- ein Speichermodul (APPA) der Signatur (SIG) als Bezugssignatur des Benutzers (2).

14. Endgerät, das eine Lernvorrichtung einer Signatur nach Anspruch 13 enthält.

15. Computerprogramm, das fähig ist, auf einem Endgerät wie in Anspruch 11 oder 14 definiert durchgeführt zu werden, wobei das Programm Codeanweisungen enthält, die, wenn das Programm von einem Prozessor ausgeführt wird, die Schritte des Erkennungsverfahrens nach Anspruch 1 und/oder des Lernverfahrens nach Anspruch 7 durchführen.

## Claims

1. Method for recognizing a user (2) carrying a terminal (1), said terminal being able to receive an NFC-type radio signal (S(t)) originating from a master device (3) furnished with an antenna (CBB) able to emit the signal, said signal (S(t)) being intended to be transmitted between the master device and the terminal on a first channel by using electromagnetic wave conduction capabilities of the body of the user when at least a part of the body of the user such as their hand is situated in proximity to the antenna, said user being able to perform a movement characterizing the transmitted signal (S(t)), the method being **characterized in that** it includes the steps of:
- receiving (E1), on the terminal, the signal (S(t)) originating from the master device (3);
- generating (E2, E'2) a first datum characteristic of the movement (M) by analysing the received signal (S(t));
- obtaining (E6, E6') at least one second characteristic datum (SIG, SIGA, SIGB), known as a reference signature;
- comparing (E7) the first characteristic datum with said at least one reference signature (SIGA, SIGB);
- recognizing (E8) the user on the basis of the results of the comparison.

2. Recognition method according to Claim 1, **characterized in that** said at least one reference signature is associated with a profile of a user and **in that** the recognition step (E8) is followed by a step (E23) of selecting the profile of the recognized user.

3. Recognition method according to Claim 1, **characterized in that** the recognition step is followed by a step (E8, E22) of establishing radio communication on a second channel (4) not using electromagnetic wave conduction capabilities of the body of the user.

4. Recognition method according to Claim 1, **characterized in that** the step of generating a first datum (M(t)) characteristic of the movement includes a sub-step of detecting a porch (P(t)) at least corresponding to a voluntary gesture (GV) of the user.

5. Recognition method according to Claim 1, **characterized in that** the step of generating a first datum (M(t)) characteristic of the movement includes the following sub-steps:
- digitizing the received signal (S(t));
- detecting (E2) at least one rising edge and one falling edge corresponding to at least one porch (P(t)) in the digital signal;
- generating (E'2) the first characteristic datum (M(t)) in the form of a digital signal including at least said porch.

6. Recognition method according to Claim 1, **characterized in that** the comparison step (E7) includes the following sub-steps, after compensation of a possible shift between the first characteristic datum (M(t)) and the reference signature (SIG, SIGA, SIGB):
- measuring a distance between the first characteristic datum (M) and the reference signature (SIG);
- validating the comparison on the basis of the measured distance.

7. Method for learning a reference signature (SIG, SIGA, SIGB) of a user (2) carrying a terminal (1), said terminal being able to receive a radio signal (Sp(t)) originating from a master device (3) furnished with an antenna able to emit the signal, said signal (Sp(t)) being intended to be transmitted between the master device and the terminal by using electromagnetic wave conduction capabilities of the body of the user when at least a part of the body of the user such as their hand is situated in proximity to the antenna, said user being able to perform a movement characterizing the transmitted signal (Sp(t)), the method being **characterized in that** it includes the steps of:
- receiving (E1) a plurality of signals (Sp(t)) originating from the master device (3);
- generating (E5) a characteristic datum, known as a reference signature (SIG, SIGA, SIGB), by analysing the plurality of signals (Sp(t)) received;
- recording (E5) said signature (SIG, SIGA, SIGB) as the reference signature of the user (2).

8. Learning method according to Claim 7, **characterized in that** it further includes a step of obtaining the necessary number (N) of signals of said plurality of signals.

9. Learning method according to Claim 8, **characterized in that** the step of obtaining the necessary number (N) of signals includes the following sub-steps:
- obtaining a plurality of characteristic signals (SP(t));
- calculating a distance between said signals of the plurality of signals;
- obtaining, on the basis of the calculated distance, a new characteristic signal to be added to the plurality of characteristic signals.

10. Device for verifying a signature, **characterized in that** it includes the following modules:
- a module (MIBCU, RECO) for receiving a first datum (M(t)) characteristic of a movement;
- a module (RECO) for obtaining at least one second characteristic datum (SIG), known as a signature;
- a module (RECO) for comparing the first characteristic datum with said at least one signature (SIG);
- a module (RECO) for communicating a result of the comparison.

11. Terminal (1) carried by a user, said terminal being able to receive an NFC-type radio signal (S(t)) originating from a master device (3) furnished with an antenna (CBB) able to emit the signal, said signal (S(t)) being intended to be transmitted between the master device and the terminal by using electromagnetic wave conduction capabilities of the body of the user when at least a part of the body of the user such as their hand is situated in proximity to the antenna, said user being able to perform a movement characterizing the transmitted signal (S(t)), the terminal being **characterized in that** it includes the following modules:
- a module (MIBCU) for receiving said signal (S(t)) originating from the master device (3);
- a module (DGV, RECO) for generating a first datum (M(t)) characteristic of the movement by analysing the received signal (S(t));
- a module (APPV) for obtaining a result of a comparison of the first characteristic datum with at least one reference signature (SIG);
- a module (APPV) for recognizing the user on the basis of the result of the comparison.

12. System for recognizing a user, comprising:
- a device (3), known as the master device, which is furnished with an antenna able to emit an NFC-type signal (S(t)) intended to be transmitted between the master device and at least one terminal by using electromagnetic wave conduction capabilities of the body of the user when at least a part of the body of the user such as their hand is situated in proximity to the antenna, said user being able to perform a movement characterizing the transmitted signal (S(t)),
- at least one terminal of a the user, according to Claim 11, comprising a device for verifying a signature according to Claim 10,
**characterized in that** said device transmits a signal characteristic of said movement, received by the receiving module of the terminal of the user.

13. Device for learning a reference signature (SIG) of a user (2) carrying a terminal (1), said terminal being able to receive an NFC-type radio signal (Sp(t)) originating from a master device (3) furnished with an antenna able to emit the signal (Sp(t)), said signal (Sp(t)) being intended to be transmitted between the master device and the terminal by using electromagnetic wave conduction capabilities of the body of the user when at least a part of the body of the user such as their hand is situated in proximity to the antenna, said user being able to perform a movement characterizing the transmitted signal (Sp(t)), **characterized in that** the learning device includes the following modules:
- a module (MIBCU) for receiving a plurality of signals (Sp(t)) originating from the master device (3);
- a module (APPA) for generating a characteristic datum, known as a signature (SIG), by analysing the plurality of signals (Sp(t)) received;
- a module (APPA) for recording said signature (SIG) as the reference signature of the user (2).

14. Terminal comprising a device for learning a signature according to Claim 13.

15. Computer program able to be implemented on a terminal as defined in Claim 11 or 14, the program comprising code instructions which, when the program is executed by a processor, carry out the steps of the recognition method according to Claim 1 and/or of the learning method according to Claim 7.
